(19) Europäisches Patentamt
European Patent Office
Office européen des brevets

(11) **EP 3 579 015 B1**

(12) **EUROPÄISCHE PATENTSCHRIFT**

(45) Veröffentlichungstag und Bekanntmachung des Hinweises auf die Patenterteilung:
**29.03.2023 Patentblatt 2023/13**

(51) Internationale Patentklassifikation (IPC):
*G01S 7/481* (2006.01)    *G01S 17/89* (2006.01)
*G01S 17/93* (2006.01)

(21) Anmeldenummer: **19176204.6**

(22) Anmeldetag: **23.05.2019**

(52) Gemeinsame Patentklassifikation (CPC):
**G01S 17/89; G01S 7/4814; G01S 7/4816; G01S 7/4817; G01S 7/4818; G01S 17/931**

(54) **VERFAHREN UND VORRICHTUNG ZUR DETEKTION EINES OBJEKTS MITTELS BREITBANDIGER LASERPULSE**

METHOD AND DEVICE FOR DETECTING AN OBJECT BY BROADBAND LASER PULSES

PROCÉDÉ ET DISPOSITIF DE DÉTECTION D'UN OBJET À L'AIDE D'UNE IMPULSION LASER À LARGE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2018 DE 102018208669**

(43) Veröffentlichungstag der Anmeldung:
**11.12.2019 Patentblatt 2019/50**

(73) Patentinhaber: **Volkswagen AG**
**38440 Wolfsburg (DE)**

(72) Erfinder: **Kurz, Heiko Gustav**
**30177 Hannover (DE)**

(56) Entgegenhaltungen:
DE-A1-102016 009 926    US-A1- 2008 273 190
US-A1- 2017 261 612    US-A1- 2017 307 736

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 579 015 B1

**Beschreibung**

Die Erfindung betrifft ein Verfahren zur Detektion eines Objekts mittels breitbandiger Laserpulse, eine entsprechende Vorrichtung sowie die Verwendung des Verfahrens bzw. der Vorrichtung in einem Kraftfahrzeug zur Erfassung von Objekten im Umfeld des Kraftfahrzeugs mittels Lidar.

Für das automatischen Fahren ist eine möglichst sichere Umfeldwahrnehmung unabdinglich. Dabei wird das Umfeld mit Hilfe von Sensoren, wie beispielsweise Radar, Lidar und/oder Kamera erfasst. Besonders wichtig ist eine ganzheitliche 360°- 3D-Erfassung der Umwelt, so dass alle statischen und dynamischen Objekte erfasst werden. Insbesondere dem Lidar kommt in der redundanten, robusten Umfelderfassung eine tragende Rolle zugute, da dieser Sensortyp präzise in der Umfelderfassung Entfernungen messen und auch zur Klassifikation eingesetzt werden kann. Allerdings sind diese Sensoren kostenintensiv und in ihrem Aufbau aufwändig. Insbesondere die 360°-3D-Umfelderfassung ist problematisch, da entweder viele kleinere Einzelsensoren notwendig sind, welche in der Regel mit vielen einzelnen Lichtquellen und Detektorelementen arbeiten, oder es werden große Sensoren eingesetzt, was im Kraftfahrzeug zu Problemen führt. Weiterhin liegen auch die kleineren Sensortypen noch in ihren räumlichen Abmessungen im Volumenbereich von mindestens einem Liter und erlauben daher keine nicht sichtbare Verbauposition im Kraftfahrzeug.

Weiterhin müssen die von jedem Sensor individuell gesammelten Daten einzeln prozessiert und/oder fusioniert werden. Dabei ist insbesondere die genaue Zeitstempelung für die Echtzeitprozessierung wichtig, was die Datenerfassung und Klassifikation zusätzlich aufwändig gestaltet.

Eine Kombination von vielen Einzelsensoren ist weiterhin besonders fehleranfällig. So hat sich im Betrieb bei Lidaren vor allem die Verwendung mechanischer Komponenten zur Schwenkung des Lasers als große Ausfallquelle erwiesen. Bei Sensoren mit mehreren Lichtquellen oder Laserdioden kommt es wiederholt zum Ausfall einzelner Elemente, so dass die Präzision der Umfelderfassung verringert wird.

Üblicherweise werden daher viele einzelne Sensoren mit überlappenden Sichtbereichen kombiniert, um eine 360°-3D-Umfelderfassung zu erreichen. Dabei werden mechanische, rotierende oder ablenkende Elemente zur Lichtablenkung bzw. Laserablenkung verwendet. Auch MEMS-Spiegelarrays oder Phased-Arrays werden vereinzelt eingesetzt.

Um eine Umfelderfassung ohne mechanische Ablenkvorrichtung realisieren zu können, werden Flash-Lidare verwendet, welche das Umfeld innerhalb ihres Sichtbereiches komplett ausleuchten.

Die Druckschrift EP 2 453 253 A1 beschreibt ein multi-direktionales Sensorsystem mit einer Lichtquelle zum Erzeugen eines Strahls elektromagnetischer Strahlung und einem Transmitter zum Übertragen der elektromagnetischen Strahlung auf ein Target. Dabei kann der Transmitter eine Vielzahl von optischen Fasern, die zur Aufnahme der elektromagnetischen Strahlung ausgelegt sind, und eine Oberfläche aufweisen, auf der ein Ende der Vielzahl von optischen Fasern in unterschiedlichen Richtungen und/oder Orientierungen terminiert, um die elektromagnetische Strahlung zu emittieren.

Die Druckschrift US 20030043058 A1 beschreibt ein auf der Anwendung verteilter Laser beruhendes Warnsystem zur Erfassung von Hindernissen im Umfeld eines Flugzeugs mit einer Vielzahl von hindernisdetektierenden Sensoren, die an entsprechenden Positionen des Flugzeugs angeordnet sind, um Laserenergie in einen vorbestimmten Raumbereich zu senden und von einem Hindernis reflektierte Laserenergie zu detektieren, einer Laserquelle zum Emittieren eines Laserstrahls entlang eines optischen Wegs und einer Vielzahl bistabiler optischer Kanäle. Jeder optische Kanal umfasst eine Vielzahl von optischen Fasern und zumindest eine Empfangsfaser, und erstreckt sich von der Laserquelle zu den entsprechenden hindernisdetektierenden Sensoren, um den Laserstrahl von seinem optischen Weg zu den hindernisdetektierenden Sensoren zur Emission in den entsprechenden Raumbereich zu leiten, und einen Lichtdetektor. An einem Hindernis reflektierte Laserenergie, die von irgendeinem der hindernisdetektierenden Sensoren empfangen wird, wird durch die Empfangsfaser des entsprechenden optischen Kanals zu dem Lichtdetektor zur Detektion des Hindernisses in dem entsprechenden Raumbereich geleitet.

Die Druckschrift US 20070177841 A1 beschreibt ein sogenanntes LADAR-System mit einer optischen Detektoranordnung, die ein aktuelles optisches Sichtfeld definiert.

Ein Beleuchtungssystem des Systems ohne bewegliche Bestandteile sendet eine gepulste Beleuchtung zu unterschiedlichen Zeiten zu jeweils einer Anzahl von Teilbereichen des aktuellen optischen Sichtfelds aus und ein Detektionssystem mit mindestens einem Sensor detektiert die Reflektion der Beleuchtung des mindestens einen Teilbereichs des aktuellen optischen Sichtfelds. Jede der Detektionsteilbereiche überlappt die beleuchteten Teilbereiche, so dass der Überlapp von jedem der beleuchteten Teilbereiche mit den detektierten Teilbereichen ein LADAR-Bildpixel definiert, dessen Auflösung besser als diejenige der detektierten Teilbereiche ist.

Die Druckschrift US 20140085622 A1 beschreibt ein System einer dreidimensionalen hyperspektralen Abbildung umfassend eine Beleuchtungsquelle zum Ausleuchten eines Zielobjekts, ein dispersives Element zum spektralen Trennen des vom Zielobjekt empfangenen Lichts in verschiedene Farben, und einen Bildsensor in Form eines Focal-Plane-Arrays zur Lichtdetektion und Bereichsbestimmung. Dabei wird räumliche Information bezüglich des Zielobjekts in einer Raumrichtung in der Ebene des Focal-Plane-Arrays, spektrale Information bezüglich einer dazu senkrechte stehenden Raumrichtung in der Ebene des Focal-Plane-Arrays, und Abstandsinformation durch Time-of-Flight-Messungen bezüglich mindestens zweier Wellenlängen gewonnen, wodurch das Zielobjekt in drei Dimensionen abgebildet und spektrale Information über mindestens einen 3D-Punkt gewonnen wird.

Die Druckschrift US 2017/0307736 A1 beschreibt ein auf mehreren Wellenlängen basierendes LIDAR-System mit einer ersten Laserquelle, die einen ersten optischen Strahl mit einer ersten Wellenlänge erzeugt, und einer zweiten Laserquelle, die einen zweiten Strahl mit einer zweiten Wellenlänge erzeugt. Ein optisches Element projiziert den ersten optischen Strahl unter Ausbildung eines ersten Strahlprofils auf eine Zielebene und projiziert den zweiten optischen Strahl unter Ausbildung eines zweiten Strahlprofils auf der Zielebene. Ein optischer Empfänger erzeugt ein erstes Wellenlängensignal basierend auf dem empfangenen, an der Zielebene reflektierten Anteil des ersten Strahlprofils und erzeugt ein zweites Wellenlängensignal basierend auf dem empfangenen, an der Zielebene reflektierten Anteil des zweiten Strahlprofils. Eine Steuereinheit erzeugt aus den ersten und zweiten Wellenlängensignalen eine Messpunktwolke, wobei die Winkelauflösung der Messpunktwolke abhängt von der relativen Position der ersten und zweiten Strahlprofile auf der Zielebene.

Die Druckschrift DE 10 2016 009 926 A1 betrifft eine Lidar-Sensorvorrichtung für ein Kraftfahrzeug zum Abtasten eines Umgebungsbereiches des Kraftfahrzeugs mittels Laserstrahlen, mit einer Sendeeinrichtung aufweisend eine Lichtquelle, wobei die Sendeeinrichtung dazu ausgelegt ist, Laserstrahlen entlang vorbestimmter Winkel in den Umgebungsbereich auszusenden, einer Empfangseinrichtung zum Empfangen der in dem Umgebungsbereich reflektierten Laserstrahlen und mit einer Matrixanordnung aufweisend einen Empfangsbereich mit ansteuerbaren Mikrostrukturelementen, welche dazu ausgelegt sind, die in dem Umgebungsbereich entlang jeweiliger, zu den Mikrostrukturelementen korrespondierender Winkel reflektierten Laserstrahlen zu der Empfangseinrichtung zu lenken.

Die Druckschrift US 2017/0261612 A1 beschreibt ein optisches System zur Messung von Abständen mit einer multiwellenlängenerzeugenden gepulsten Lichtquelle, die eine Vielzahl von gepulsten Lichtpulsen unterschiedlicher Wellenlängen erzeugt, wobei ein sich wiederholender Zyklus generiert wird, während dem sich die Wellenlänge fortlaufend ändert. Weiter umfasst das System eine Scanvorrichtung zum Scannen der Lichtpulse, einen wellenlängenselektiven Lichtempfänger, der das reflektierte Licht der Vielzahl von Lichtpulsen verschiedener Wellenlängen von einem Ziel empfängt und ein den unterschiedlichen Wellenlängen entsprechendes Lichtempfangssignal generiert, einen Prozessor, der die Zeit bestimmt zwischen der Erzeugung jeder der Vielzahl der Lichtpulse unterschiedlicher Wellenlängen der multiwellenlängenerzeugenden gepulsten Lichtquelle und der Erzeugung des Lichtempfangssignal einer entsprechenden Wellenlänge, die innerhalb einer vorbestimmten Zeit erzeugt wurde, und der den Abstand zu dem Ziel in der Scanrichtung aus der detektierten Zeit bestimmt.

Die Druckschrift US 2008/0273190 A1 beschreibt ein berechnungsloses System zum Bestimmen der Richtung und des Abstands zu einem Ziel, umfassend das Eintauchen eines Gebiets, welches ein zu schützendes Gebiet umschließt, in eine polyspektrale Serie schmaler fächerförmiger Strahlen unterschiedlicher Farben von zumindest zwei Projektoren. Die unterschiedlich gefärbten Strahlen emittieren unter unterschiedlichen Winkeln, wodurch das Gebiet, welches das zu schützende Gebiet umschließt, mit unterschiedlichem Farbcode abgebildet wird, wo sich die Strahlen unterschiedlicher Farben kreuzen, so dass farbcodierte Zellen gebildet werden. Licht, welches in das zu schützende Gebiet von einer Bedrohung zurückreflektiert wird, weist daher eine Farbe auf, die den Farben derjenigen Strahlen entspricht, die sich an der Bedrohung kreuzen, so dass durch die Bestimmung der reflektierten Farben der Raum bestimmt werden kann, in dem sich die Bedrohung befindet.

Die bekannten Systeme haben die folgenden Nachteile:

- es ist ein Verbau mehrerer einzelner Sensoren notwendig,
- große räumliche Abmessungen der Sensoren erlauben keinen verdeckten Verbau,
- mechanische Ablenkvorrichtungen sind unzuverlässig,
- es ist ein hoher Aufwand für die Synchronisation der einzelnen Sensoren notwendig,
- die Datenfusion ist aufwändig und fehleranfällig, da keine zentrale Datenerfassung und Lichterzeugung vorhanden ist,
- die Einzelsensoren haben geringe Sichtbereiche, größere Sichtbereiche sind bisher nur mittels mechanischer Ablenkvorrichtungen möglich,
- die Systeme sind kostenintensiv,
- Flash-Lidare haben eine geringe Reichweite, und
- die Sicherheit für die Augen von Personen im Umfeld ist bei Flash-Lidaren unsicher.

Der Erfindung liegt daher die Aufgabe zugrunde, ein vereinfachtes und robustes Verfahren und eine entsprechende Vorrichtung zur Detektion von Objekten, insbesondere solche im Umfeld eines Kraftfahrzeugs, zu schaffen.

Die Aufgabe wird durch ein Verfahren zur Detektion eines Objekts mittels breitbandiger Laserpulse mit den Merkmalen des Anspruchs 1, durch eine entsprechende Vorrichtung mit den Merkmalen des Anspruchs 6 sowie die Verwendung der Vorrichtung einschließlich des Verfahrens mit den Merkmalen des Anspruchs 12 gelöst. Bevorzugte Ausgestaltungen der Erfindung sind Gegenstand der Unteransprüche.

Das erfindungsgemäße Verfahren zur Detektion eines Objekts mittels breitbandiger Laserpulse eines Lasers mit einer vorgegebenen, einen vorgegebenen Wellenlängenbereich überdeckenden Bandbreite und Wellenlängenverteilung, Pulsdauer und Wiederholfrequenz umfasst die Schritte:

- Emittieren eines breitbandigen Laserpulses,
- Erzeugen eines Fächerpulses, der einen vorgegebenen Winkel ausleuchtet, durch spektrale Aufspaltung des breitbandigen Laserpulses mittels Aufbringen einer Winkeldispersion auf den breitbandigen Laserpulses, wodurch die unterschiedlichen Wellenlängen des Wellenlängenbereichs des breitbandigen Laserpulses in unterschiedliche Winkel aufgefächert werden,
- Detektieren eines reflektierten Teilabschnitts des Fächerpulses, der an dem in dem Fächerpuls angeordneten Objekt reflektiert wird,
- Bestimmen der im reflektierten Teilabschnitt des Fächerpulses vorhandenen Wellenlängen des Wellenlängenbereichs des Fächerpulses, d.h. der reflektierten Bandbreite des Teilabschnitts,
- Bestimmen der Laufzeit des Fächerpulses vom dispersiven Element zum Objekt mittels eines Time-of-Flight-Verfahrens, und
- Bestimmen des Abstands und der Breite des Objekts als Funktion der Laufzeit des Fächerpulses und des ermittelten Wellenlängenbereichs des reflektierten Teilabschnitts des Fächerpulses, d.h. der reflektierten Bandbreite.

Vorzugsweise liegen die Wellenlängen der breitbandigen Laserpulse in einen Bereich von 400 nm bis 4 µm. Dabei umfasst der eingesetzte Wellenlängenbereich üblicherweise einen Ausschnitt des genannten Bereichs und hängt von der eingesetzten Lichtquelle ab. Mit anderen Worten, die Bandbreite des Laserpulses liegt im oben genannten Bereich.

Weiter bevorzugt liegt der ausgeleuchtete Winkel des Fächerpulses in einem Bereich von 0,1° bis 180°. Auch hier hängt der tatsächlich verwendete Winkel zur Ausleuchtung des Umfelds von der aktuellen Anwendung und dem eingesetzten Licht ab.

Weiter bevorzugt erfolgt eine Kalibrierung der im Fächerpuls vorhandenen Wellenlängen zum von der Winkeldispersion erzeugten Winkel der räumlichen Ablenkung, so dass eine eindeutige Zuordnung von Winkel zur Wellenlänge des Fächerpulses gewährleistet ist.

Vorzugsweise wird der Wellenlängenbereich des reflektierten Teilabschnitts durch die spektralen Grenzen des reflektierten Teilabschnitts bestimmt. Mit anderen Worten, es wird die Bandbreite des reflektierten Teilabschnitts bestimmt.

Die erfindungsgemäße Vorrichtung zur Detektion eines Objekts mittels breitbandiger Laserpulse eines Lasers mit einer vorgegebenen Bandbreite die einen vorgegebenen Wellenlängenbereich überdeckt, und Wellenlängenverteilung in dem Wellenlängenbereich, Pulsdauer und Wiederholfrequenz, wobei die Vorrichtung zur

Durchführung des im Vorangegangenen beschriebenen Verfahrens eingerichtet und ausgelegt ist, umfasst

- ein LIDAR-System zur Erzeugung breitbandiger Laserpulse,
- mindestens eine Dispersions-Einrichtung zum Aufbringen einer Winkeldispersion auf die Laserpulse zur Erzeugung von Fächerpulsen durch spektrale Aufspaltung, die einen vorgegebenen Winkel ausleuchten, wodurch die unterschiedlichen Wellenlängen des Wellenlängenbereichs des breitbandigen Laserpulses in unterschiedliche Winkel aufgefächert werden,
- einen spektralen Detektor zur Ermittlung der im reflektierten Teilabschnitt des Fächerpulses vorhandenen Wellenlängen des Wellenlängenbereichs des Fächerpulses (6),, also der Bandbreite des reflektierten Teilabschnitts,
- eine Einrichtung zur Bestimmung der Laufzeit des Fächerpulses zwischen der Dispersionseinrichtung und dem Objekt, und
- eine Einrichtung zur Bestimmung des Abstands und der Breite des Objekts bezüglich der Dispersionseinrichtung aus der Laufzeit und des ermittelten Wellenlängenbereichs des reflektierten Teilabschnitts der Fächerpulse.

Vorzugsweise wird die Dispersions-Einrichtung durch ein dispersives Element gebildet. Als dispersives Element kann ein Prisma, ein Gitter oder dergleichen in Betracht kommen.

Weiter bevorzugt wird der spektrale Detektor durch ein Spektrometer oder eine Multispektralkamera gebildet, wobei die Aufzählung nicht eingrenzend zu verstehen ist. Andere geeignete spektrale Detektoren können ebenfalls eingesetzt werden.

Weiter bevorzugt weist die Vorrichtung eine Vielzahl von Splittern auf, die den breitbandigen Laserpuls in eine entsprechende Vielzahl von Laserpulsen aufspalten. Durch die Splitter wird daher der einzelne Laserpuls in eine entsprechende Vielzahl von Laserpulsen aufgespalten, die die gleichen breitbandigen Eigenschaften des ursprünglichen Eingangspulses haben und über entsprechende optische Fasern geleitet werden.

Weiter bevorzugt erzeugt eine Vielzahl von Dispersions-Einrichtung eine Vielzahl von Fächerpulsen aus der Vielzahl der Laserpulse, so dass die erzeugten Fächerpulse zur Detektion von Objekten in unterschiedlichen räumlichen Bereichen verwendet werden können. Mit anderen Worten, es wird eine Vielzahl von Fächerpulsen erzeugt, die in unterschiedliche Raumwinkel emittieren.

Vorzugsweise erfolgt die Leitung der Laserpulse zu den Dispersions-Einrichtungen über optische Fasern. Mit anderen Worten, ein vom Lidar-System erzeugter breitbandiger Laserpuls wird den Splittern und den nachfolgenden Dispersions-Einrichtungen per optischer Faser zugeführt, was die Lichtleitung robust macht.

Die erfindungsgemäße Verwendung der im Vorangegangenen erläuterten Vorrichtung und damit auch des Verfahrens erfolgt in einem Kraftfahrzeug zur Bestimmung von Objektes im Umfeld des Kraftfahrzeugs.

Das hier beschriebene Verfahren und Vorrichtung basiert auf der Verwendung einer breitbandigen Lichtquelle vorgegebener Bandbreite, welche kurze Laserpulse emittiert. Dafür können beispielsweise modengekoppelte Lasersysteme, Faserlaser und/oder andere Quellen kohärenter Strahlung ausreichender Bandbreite verwendet werden. Diese breitbandigen Laserpulse werden mittels einer Glasfaser und optischen Splittern in eine Vielzahl von Emittern aufgeteilt. Jede der einzelnen Glasfasern stellt einen Sensoremitter dar, welcher kohärente, breitbandige Strahlung emittiert. Am jedem Faserende befindet sich ein dispersives optisches Element oder eine Dispersions-Einrichtung, wie beispielsweise ein Prisma, dieses kann allerdings durch ein anderes dispersives Element ersetzt werden, wie beispielsweise ein Gitter, Bulk-Material, oder Ähnliches. Auch eine direkte Aufbringung eines optischen Gitters auf das Faserende bzw. auf einen am Faserende angebrachten optische Taper ist denkbar. Durch das dispersive Element wird eine Winkeldispersion auf den Puls aufgetragen, was auch als Angular Chirp bezeichnet wird, welche eine räumliche Aufweitung des Lichtimpulses zu einem Fächerpuls verursacht.

Dabei werden die unterschiedlichen Wellenlängen des breitbandigen Strahls in unterschiedliche Winkel abgelenkt. Der Winkel der räumlichen Ablenkung wird hierbei durch den Brechungsindex des verwendeten dispersiven Materials, die Wellenlänge des Lasers, sowie die Bandbreite der Pulse definiert. Die Divergenz des Strahls kann gegebenenfalls durch eine Abbildungsoptik erhöht und entsprechend eingestellt werden. Jeder Wellenlänge kann somit ein bestimmter Raumwinkel zugeordnet werden, in welchen dieser spektrale Anteil der Bandbreite propagiert.

Durch eine Kalibrierung der Wellenlänge zum Ablenkungswinkel und dem Wissen über die Verbauposition kann das Sichtfeld des Emitters ermittelt werden. Bei Auftreffen eines Teils des divergenten Strahls auf ein Hindernis wird durch die Winkeldispersion nur ein spektraler Anteil reflektiert. Die reflektierten spektralen Anteile, die die reflektierte Bandbreite darstellt, können mittels eines Spektrometers oder einer Multispektralkamera als Detektor bestimmt werden.

Die Laufzeitmessung zwischen Emitter, also dem dispersiven Element, und Detektor erlaubt, wie bei allen Lidaren, die Entfernungsmessung zwischen Objekt und Emitter, was hier als x-Koordinate bezeichnet ist. Abhängig von der x-Koordinate und der Größe des Objektes variiert die Bandbreite des reflektierten spektralen Anteils. Bei fixer Größe des Objekts führen nahe Objekte zu einer hohen Bandbreite der emittierten Strahlung, da das Objekt beispielsweise im Extremfall von allen Spektralanteilen bestrahlt wird. Im Gegensatz dazu verursachen weit entfernte Objekte gleicher Größe ein schmalbandiges reflektiertes Signal. Wird nun das reflektierte Spektrum vermessen und ist die x-Koordinate bekannt, so kann die y-Koordinate, also die räumlichen Abmessungen des Objekts, durch die beiden spektralen Grenzen des detektierten Signals vermessen werden. Das Messprinzip ist dabei ähnlich einer Polarkoordinatendarstellung, wodurch das Objekt eindeutig in x und y charakterisiert werden kann.

Durch Kombination vieler Emitter und die Anwendung im Kraftfahrzeug kann somit das gesamte Umfeld des Kraftfahrzeugs erfasst werden. Dabei ist die geringe Größe der glasfaserbasierten Emitter von Vorteil, welche eine verdeckte Verbauung erlaubt, wie beispielsweise hinter der Windschutzscheibe, in A-, B- und C-Säulen oder in Scheinwerfern. Auch die Synchronisation der einzelnen Emitter ist unproblematisch. Diese können nacheinander ausgelöst werden und somit zeitverzögert in 360° in mehreren Ebenen um das Fahrzeug herum das Umfeld detektieren.

Die Zeitverzögerung zwischen den einzelnen Emittern kann beispielsweise durch unterschiedliche Lichtlaufzeiten in den Fasern realisiert werden, oder durch die Integration von optischen Verzögerungsstrecken.

Die Erfassung mittels eines spektral-auflösenden Detektors kann beispielsweise durch ein handelsübliches Spektrometer erfolgen. Auch eine Integration einer Multispektralkamera zur Detektion ist möglich. Diese würde darüber hinaus noch eine bildgebende Detektion des Umfeldes ermöglichen.

Die wesentlichen Vorteile des erfindungsgemäßen Verfahrens bzw. der Vorrichtung und deren Anwendung im Kraftfahrzeug sind:

- es wird mit einer zentralen Lichtquelle und einer zentralen Detektoreinheit gearbeitet,
- die Emitter sind räumlich verteilt angeordnet und sind einfach, kostengünstig, haben kleine räumliche Ausmaße und können aus massenfertigungstauglichen Bauteilen hergestellt werden, wie beispielsweise Glasfaser, Taper und dispersive Elemente,
- es ist keine aufwändige, einzelne Kalibrierung der Sensoren notwendig, sondern die Kalibrierung geschieht zentral in einer Einheit auf der Detektorseite, wobei der Detektor dabei viele Emitter detektieren kann,
- von der Emitterseite muss nur die Position bekannt sein und das Sichtfeld, also der Abstrahlwinkel der Fächerpulse, wird einmalig bei der Fertigung bestimmt,
- die Lichtpulse können darüber hinaus zur Synchronisation verwendet werden, so können bei der Verwendung von Laserpulsen mit stabiler Repetitionsrate als Strahlungsquelle, wie beispielsweise modengekoppelte, breitbandige gütegeschaltete oder cavity-dumped Pulse, diese Lichtpulse als Uhr zur Synchronisation verwendet werden, wozu beispielsweise ein Teil des Lichtes dabei aus der Glasfaser ausgekoppelt und per Fotodiode als Triggersignal zu Zeitstempelung verwendet wird, so dass das Lasersystem somit als "Uhr" für den gesamten Sensor benutzt werden kann,

- die Elemente des Systems können verdeckt verbaut werden, was bisher in keinem Lidar möglich war,
- die gesamte Strahlablenkung ist festkörperbasiert, es gibt daher keine beweglichen Teile,
- das optisches Signal und die optischen Fasern können zur Signalübertragung weiterer Detektortypen verwendet werden, so dass eine gleichzeitige Verwendung einer Leitung zur Datenübertragung mehrerer Sensortypen wie Radar, Lidar, Kamera eingesetzt werden kann,
- der Pulslaser bietet eine einfache Möglichkeit der Bestimmung der x-Koordinate mittels Time-of-Flight-Messung,
- die gesamte Vorrichtung ist kostengünstig,
- es werden etablierte Technologien verwendet, die in Massenproduktion verfügbar sind,
- der Aufbau ist einfach,
- die Anzahl von Einzelsensoren ist reduziert,
- die Kalibrierung ist einfach,
- ebenso ist die Synchronisierung der einzelnen Emitter einfach,
- es ist möglich die Strahlungsquelle zur Synchronisierung mehrerer Sensortypen zu verwenden,
- die Glasfaserleitungen können zur Signalübertragung mehrerer Detektortypen verwendet werden, und
- ein verdeckter Verbau im Kraftfahrzeug ist möglich.

Das erfindungsgemäße Verfahren und die Vorrichtung können in allen Fahrzeugen, die anspruchsvolle Fahrerassistenzsysteme, wie beispielsweise Staupilot, Autobahnpilot, automatisches oder autonomes Fahren umfassen, erfolgen. Dies trifft auch für Nutzfahrzeuge und Lastkraftwagen zu.

Eine bevorzugte Ausführungsform der Erfindung wird nachfolgend anhand der Zeichnungen erläuter. Dabei zeigt

Fig. 1    das Lidar-Emissionssystem eines Kraftfahrzeugs in schematischer Darstellung, und

Fig. 2    die Detektion der Breite eines durch das Lidar-Emissionssystem angeleuchteten Objekts in schematischer Darstellung.

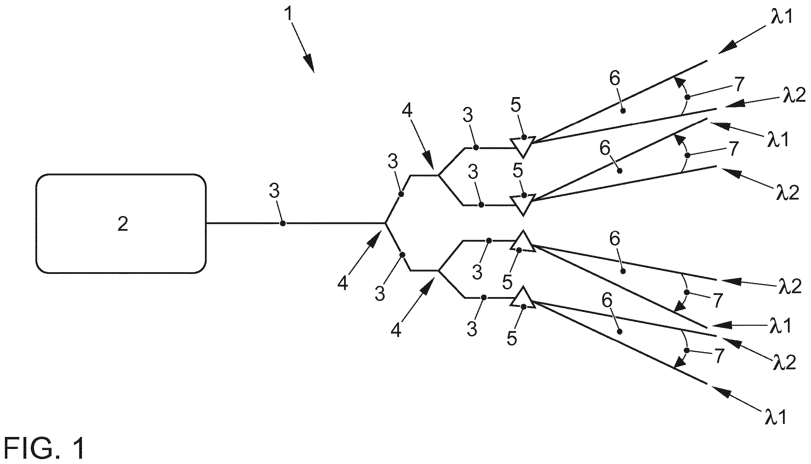

Das in der Fig. 1 dargestellte Lidar-Emissionssystem 1 für ein Kraftfahrzeug umfasst einen Laser 2, der breitbandige Lichtpulse emittiert. Dabei überdeckt der breitbandige Laserpuls einen vorgegebenen Wellenlängenbereich von $\lambda 1$ bis $\lambda 2$, wobei $\lambda 1 > \lambda 2$ gelten soll.

Wird daher zum Beispiel angenommen, dass es sich bei den emittierten Lichtpulsen um weißes Licht handelt, so würde $\lambda 1$ im roten Bereich und $\lambda 2$ im blauen Bereich liegen. In der automobilen Anwendung wird es sich bei den breitbandigen Lichtpulsen eher um solche im Infrarot-Bereich handeln, um beteiligte Verkehrsteilnehmer im Umfeld des Kraftfahrzeugs nicht zu belästigen und/oder zu blenden. Die breitbandigen Pulse des emittierenden Lasers 2 werden mehreren optischen Splittern 4 zugeführt, so dass eine Vielzahl emittierender optischer Quellen geschaffen wird. Im vorliegenden Beispiel der Fig. 1 sind drei Splitter 4 dargestellt, was zu vier Quellen optisch kohärenter Laserpulse führt, wobei die Zuführung und Weiterleitung der jeweiligen Laserpulse über optische Fasern 3 erfolgt. Die optischen Laserpulse der emittierenden Splitter 4 werden dann jeweils über optische Fasern 3 auf ein zugeordnetes optisch dispersives Element 5 geleitet, die in der Fig. 1 beispielsweise durch Prismen gebildet werden. Dabei können Prismen 5 in Abhängigkeit vom verwendeten Material sowohl im optisch sichtbaren als auch im infraroten Bereich eingesetzt werden.

Die optisch dispersiven Elemente 5 bewirken eine spektrale Aufspaltung des jeweiligen breitbandigen Laserpulses, so dass am Ausgang jedes dispersiven Elements 5 ein spektral aufgespaltener Fächerpuls 6 entsteht, welcher sich als Funktion des dispersiven Elements 5 über einen vorgegebenen Winkel 7 erstreckt. Dieser spektral aufgespaltene Fächerpuls 6 wird überwiegend als Spatial Chirp, Angular Chirp und seltener als räumliche Zirpe bezeichnet. Dabei verteilen sich die am breitbandigen Laserpuls beteiligten Wellenlängen über den Winkel 7 des Fächerpulses 6, was bedeutet, dass sich die Frequenz bzw. Wellenlänge über den Bereich des Winkels 7 des Fächerpulses 6 ändert. Für den Fall von weißem Licht würde die Wellenlänge des Fächerpulses 6 sich über den Winkel 7 von Rot bis Blau ändern. Mit anderen Worten, die Bandbreite des Laserpulses wird über den Winkel 7 räumlich aufgespalten.

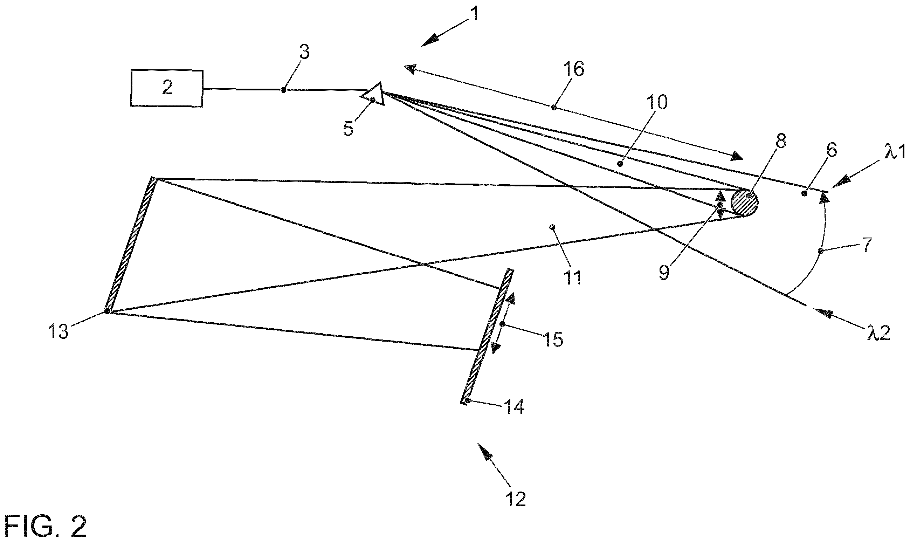

Fig. 2 zeigt die Detektion der Breite eines durch das Lidar-Emissionssystem 1 angeleuchteten Objekts 8, wie beispielsweise eines Hindernisses, wobei das Lidarsystem 1 hier vereinfacht dargestellt ist und den Laser 2, eine die breitbandigen Laserpulse transportierende Faser 3 sowie ein dispersives Element 5 umfasst, welches durch ein Prisma realisiert ist, auf das die Laserpulse mittels der Faser 3 geleitet werden. Das Prisma bewirkt eine spektrale Aufspaltung der breitbandigen Laserpulse in einen Fächerpuls 6 über einen durch das Prisma definierten Winkel 7, wobei in der Fig. 2 die spektrale Verteilung über den Fächerpuls 6 durch den Wellenlängenbereich $\lambda 1$ bis $\lambda 2$ wie in Fig. 1 symbolisiert ist.

Mit anderen Worten, der breitbandige Laserpuls wird vom Prisma über den Winkel 7 dispergiert, wodurch die unterschiedlichen Wellenlängen des Laserpulses in der Ebene des Fächerpulses 6 separiert werden.

Im Strahlengang des Fächerpulses 6 ist ein Objekt 8 angeordnet, welches eine Breite 9 aufweist. Das Objekt 8 wird nun von einem Teilabschnitt 10 des Fächerpulses 6 über seine Breite 9 von unterschiedlichen Wellenlängen des Teilabschnitts 10 angestrahlt, wobei der Teilabschnitt 10 die Wellenlängenverteilung Δλ aufweist, mit anderen Worten einen Ausschnitt der Wellenlängenverteilung λ1 bis λ2 des Fächerpulses 6 bildet. Das Objekt 8 reflektiert aufgrund seiner Breite 9 den Teilabschnitt 10 des Leuchtfelds 6 und erzeugt einen reflektierten Teilabschnitt 11, der den reflektierte Wellenlängenbereich Δλ aufweist, welcher einem Spektrometer 12 zugeführt wird. Dabei umfasst das Spektrometer 12 zumindest ein Gitter 13 sowie einen optischen Sensor 14, beispielsweise ein CCD-Sensor. Der vom Objekt 8 in das Spektrometer 12 reflektierte Teilabschnitt 11 mit dem reflektierten Wellenlängenbereich Δλ wird als Funktion seiner beteiligten Wellenlängen vom Gitter 13 auf den CCD-Sensor 14 abgebildet und erzeugt als Funktion des an der Reflexion beteiligten Wellenlängenbereichs Δλ ein Bild der Breite 15. Die vom CCD-Sensor gemessene Breite 15 entspricht dem Wellenlängenbereich Δλ des reflektierten Teilabschnitts 11 und ist daher ein direktes Maß für die Breite 9 des Objekts 8.

Um die tatsächliche Breite 9 des Objekts 8 bestimmen zu können, muss neben der gemessenen Wellenlängenverteilung Δλ des reflektierten Teilabschnitts 11 der Abstand 16 des Objekts 8 von dem Pulsemitter, nämlich dem dispersiven Element 5 bekannt sein. Da ein gepulster Laser 2 verwendet wird, ist die Pulslänge und die Wiederholfrequenz bekannt, so dass mittels einer Time-of-Flight-Messung der Abstand 16 ausgedrückt werden kann als

$$\Delta x = c \cdot \Delta t,$$

wobei Δt die gemessene Laufzeit des Fächerpulses 6 zwischen dem dispersiven Element 5 und dem Objekt 8 ist und c die Lichtgeschwindigkeit bedeutet. Die Breite des Objekts 6 ergibt sich dann als Funktion des Abstands Δx und dem gemessenen Wellenlängenbereich Δλ des reflektierten Teilabschnitts 11, und kann ausgedrückt werden als:

$$\Delta y = f(\Delta \lambda, \Delta t).$$

Vergleichbar einem Polarkoordinatensystem mit einem Radius und einem Winkel entspricht der Abstand Δx mit dem Bezugszeichen 16 einem Radius und der Wellenlängenbereich Δλ einem Winkel. Auf diese Weise kann das Objekt 8 vollständig mittels seiner Breite 9 und seinem Abstand 16 im Umfeld eines Kraftfahrzeugs (nicht dargestellt) beschrieben werden.

**Bezugszeichenliste**

| 1 | Lidar-Emissionssystem |
| 2 | Laser |
| 3 | optische Faser |
| 4 | Splitter |
| 5 | dispersives Element |
| 6 | Fächerpuls |
| 7 | Winkel |
| 8 | Objekt |
| 9 | Breite des Objekts |
| 10 | Teilabschnitt |
| 11 | reflektierter Teilabschnitt |
| 12 | Spektrometer |
| 13 | Gitter |
| 14 | CCD |
| 15 | Bildbreite |
| 16 | Abstand |
| λ1 | Wellenlänge |
| λ2 | Wellenlänge |

**Patentansprüche**

1. Verfahren zur Detektion eines Objekts (8) mittels breitbandiger Laserpulse eines Lasers (2) mit einer vorgegebenen Bandbreite, die einen vorgegebenen Wellenlängenbereich überdeckt, und Wellenlängenverteilung in dem Wellenlängenbereich, Pulsdauer und Wiederholfrequenz mit den Schritten:

    Emittieren eines breitbandigen Laserpulses,
    Erzeugen eines Fächerpulses (6), der einen vorgegebenen Winkel (7) ausleuchtet, durch spektrale Aufspaltung des breitbandigen Laserpulses mittels Aufbringen einer Winkeldispersion auf den breitbandigen Laserpuls durch ein dispersives Element (5), wodurch die unterschiedlichen Wellenlängen des Wellenlängenbereichs des breitbandigen Laserpulses in unterschiedliche Winkel aufgefächert werden,
    Detektieren eines reflektierten Teilabschnitts (11) des Fächerpulses (6), der an dem in dem Fächerpuls (6) angeordneten Objekt (8) reflektiert wird,
    Bestimmen der im reflektierten Teilabschnitt (11) des Fächerpulses (6) vorhandenen Wellenlängen des Wellenlängenbereichs des Fächerpulses (6),
    Bestimmen der Laufzeit des Fächerpulses (6) vom dispersiven Element (5) zum Objekt (8) mittels eines Time-of-Flight-Verfahrens, und
    Bestimmen des Abstands und der Breite des Objekts (8) als Funktion der ermittelten Laufzeit des Fächerpulses (6) und des ermittelten Wellenlängenbereichs des reflektierten Teilabschnitts (11) des Fächerpulses (6).

2. Verfahren nach Anspruch 1, **dadurch gekennzeichnet, dass** die Wellenlängen der breitbändigen Laserpulse in einen Bereich von 400 nm bis 4μm liegen.

3. Verfahren nach einem der Ansprüche 1 oder 2, **dadurch gekennzeichnet, dass** der ausgeleuchtete Winkel (7) des Fächerpulses in einem Bereich von 0,1° bis 180° liegt.

4. Verfahren nach einem der vorangegangenen Ansprüche, **dadurch gekennzeichnet, dass** eine Kalibrierung der im Fächerpuls (6) vorhandenen Wellenlängen zum von der Winkeldispersion erzeugten Winkel der räumlichen Ablenkung erfolgt.

5. Verfahren nach einem der vorangegangenen Ansprüche, **dadurch gekennzeichnet, dass** der Wellenlängenbereich des reflektierten Teilabschnitts (11) durch die spektralen Grenzen des reflektierten Teilabschnitts (11) bestimmt wird.

6. Vorrichtung zur Detektion eines Objekts (8) mittels breitbandiger Laserpulse eines Lasers (2) mit einer vorgegebenen Bandbreite, die einen vorgegebenen Wellenlängenbereich überdeckt, und Wellenlängenverteilung in dem Wellenlängenbereich, Pulsdauer und Wiederholfrequenz, wobei die Vorrichtung zur Durchführung des Verfahrens nach einem der vorangegangenen Ansprüche eingerichtet und ausgelegt ist, mit

   einem Lidar-System (1) zur Erzeugung breitbandiger Laserpulse,
   mindestens einer Dispersions-Einrichtung zum Aufbringen einer Winkeldispersion auf die Laserpulse zur Erzeugung von Fächerpulsen (6) durch spektrale Aufspaltung, die einen vorgegebenen Winkel ausleuchten, wodurch die unterschiedlichen Wellenlängen des Wellenlängenbereichs des breitbandigen Laserpulses in unterschiedliche Winkel aufgefächert werden,
   einem spektralen Detektor zur Ermittlung der im reflektierten Teilabschnitt (11) des Fächerpulses (6) vorhandenen Wellenlängen des Wellenlängenbereichs des Fächerpulses (6),
   einer Einrichtung zur Bestimmung der Laufzeit des Fächerpulses zwischen der mindestens einen Dispersions-Einrichtung und dem Objekt (8), und
   einer Einrichtung zur Bestimmung des Abstands und der Breite des Objekts bezüglich der mindestens einen Dispersions-Einrichtung aus der ermittelten Laufzeit und des ermittelten Wellenlängenbereichs des reflektierten Teilabschnitts (11) der Fächerpulse (6).

7. Vorrichtung nach Anspruch 6, **dadurch gekennzeichnet, dass** die Dispersions-Einrichtung durch ein dispersives Element (5) gebildet wird.

8. Vorrichtung nach einem der Ansprüche 6 oder 7, **dadurch gekennzeichnet, dass** der spektrale Detektor durch ein Spektrometer (12) oder eine Multispektralkamera gebildet wird.

9. Vorrichtung nach einem der Ansprüche 6 bis 8, **dadurch gekennzeichnet, dass** die Vorrichtung eine Vielzahl von Splittern (4) aufweist, die den Laserpuls in entsprechende Laserpulse aufspalten.

10. Vorrichtung nach Anspruch 9, **dadurch gekennzeichnet, dass** eine Vielzahl von Dispersions-Einrichtung eine Vielzahl von Fächerpulsen aus der Vielzahl der Laserpulse erzeugt, so dass die erzeugten Fächerpulse zur Detektion von Objekten in unterschiedlichen räumlichen Bereichen verwendet werden.

11. Vorrichtung nach einem der Ansprüche 6 bis 10, **dadurch gekennzeichnet, dass** die Laserpulse über optische Fasern (3) zu den Dispersions-Einrichtungen geleitet werden.

12. Verwendung der Vorrichtung nach einem der Ansprüche 6 bis 11 in einem Kraftfahrzeug zur Bestimmung von Objekten im Umfeld des Kraftfahrzeugs.

**Claims**

1. Method for detecting an object (8) by means of broadband laser pulses of a laser (2) with a predefined bandwidth, which covers a predefined wavelength range, and wavelength distribution in the wavelength range, pulse duration and repetition frequency, comprising the following steps:

   emitting a broadband laser pulse,
   generating a fan pulse (6), which illuminates a predefined angle (7), by spectrally splitting the broadband laser pulse by means of applying an angle dispersion to the broadband laser pulse by way of a dispersive element (5), whereby the different wavelengths of the wavelength range of the broadband laser pulse are fanned out into different angles,
   detecting a reflected subsection (11) of the fan pulse (6) which is reflected at the object (8) arranged in the fan pulse (6),
   determining the wavelengths of the wavelength range of the fan pulse (6) that are present in the reflected subsection (11) of the fan pulse (6),
   determining the time of flight of the fan pulse (6) from the dispersive element (5) to the object (8) by means of a time-of-flight method, and
   determining the distance and the width of the object (8) as a function of the ascertained time of flight of the fan pulse (6) and the ascertained wavelength range of the reflected subsection (11) of the fan pulse (6).

2. Method according to Claim 1, **characterized in that** the wavelengths of the broadband laser pulses are in a range of 400 nm to 4 pm.

3. Method according to either of Claims 1 and 2, **characterized in that** the illuminated angle (7) of the fan pulse is in a range of 0.1° to 180°.

4. Method according to any of the preceding claims, **characterized in that** a calibration of the wavelengths present in the fan pulse (6) with respect to the angle of the spatial deflection that is generated by the angle dispersion is effected.

5. Method according to any of the preceding claims, **characterized in that** the wavelength range of the reflected subsection (11) is determined by the spectral limits of the reflected subsection (11).

6. Apparatus for detecting an object (8) by means of broadband laser pulses of a laser (2) with a predefined bandwidth, which covers a predefined wavelength range, and wavelength distribution in the wavelength range, pulse duration and repetition frequency, the apparatus being configured as designed for carrying out the method according to any of the preceding claims, comprising

   a lidar system (1) for generating broadband laser pulses, at least one dispersion device for applying an angle dispersion to the laser pulses in order to generate fan pulses (6) by spectral splitting, which illuminate a predefined angle, whereby the different wavelengths of the wavelength range of the broadband laser pulse are fanned out into different angles,
   a spectral detector for ascertaining the wavelengths of the wavelength range of the fan pulse (6) that are present in the reflected subsection (11) of the fan pulse (6),
   a device for determining the time of flight of the fan pulse between the at least one dispersion device and the object (8), and
   a device for determining the distance and the width of the object in relation to the at least one dispersion device from the ascertained time of flight and the ascertained wavelength range of the reflected subsection (11) of the fan pulses (6).

7. Apparatus according to Claim 6, **characterized in that** the dispersion device is formed by a dispersive element (5).

8. Apparatus according to either of Claims 6 and 7, **characterized in that** the spectral detector is formed by a spectrometer (12) or a multi-spectral camera.

9. Apparatus according to any of Claims 6 to 8, **characterized in that** the apparatus has a plurality of splitters (4) which split the laser pulse into corresponding laser pulses.

10. Apparatus according to Claim 9, **characterized in that** a plurality of dispersion devices generate a plurality of fan pulses from the plurality of laser pulses, such that the generated fan pulses are used for detecting objects in different spatial regions.

11. Apparatus according to any of Claims 6 to 10, **characterized in that** the laser pulses are guided via optical fibres (3) to the dispersion devices.

12. Use of the apparatus according to any of Claims 6 to 11 in a motor vehicle for determining objects in the environment of the motor vehicle.

**Revendications**

1. Procédé permettant de détecter un objet (8) au moyen des impulsions laser à large bande d'un laser (2) avec une largeur de bande prédéfinie couvrant une plage de longueurs d'onde prédéfinie, et une distribution de longueurs d'onde dans la plage de longueurs d'onde, une durée d'impulsion et une fréquence de répétition, comprenant les étapes consistant à :

   émettre une impulsion laser à large bande,
   générer une impulsion en éventail (6) éclairant un angle prédéfini (7), par séparation spectrale de l'impulsion laser à large bande au moyen de l'application d'une dispersion angulaire à l'impulsion laser à large bande par un élément dispersif (5) de sorte que les différentes longueurs d'onde de la plage de longueurs d'onde de l'impulsion laser à large bande soient dispersées en éventail sur différents angles,
   détecter une section réfléchie (11) de l'impulsion en éventail (6) qui est réfléchie sur un objet (8) disposé dans l'impulsion en éventail (6),
   déterminer les longueurs d'onde de la plage de longueurs d'onde de l'impulsion en éventail (6) présentes dans la section réfléchie (11) de l'impulsion en éventail (6),
   déterminer le temps de propagation de l'impulsion en éventail (6) de l'élément dispersif (5) à l'objet (8) au moyen d'un procédé de temps de vol, et
   déterminer la distance et la largeur de l'objet (8) en fonction du temps de propagation établi de l'impulsion en éventail (6) et de la plage de longueurs d'onde de la section réfléchie (11) de l'impulsion en éventail (6).

2. Procédé selon la revendication 1, **caractérisé en ce que** les longueurs d'onde des impulsions laser à large bande se situent dans une plage de 400 nm à 4 pm.

3. Procédé selon l'une quelconque des revendications 1 ou 2, **caractérisé en ce que** l'angle (7) éclairé de l'impulsion en éventail est situé dans une plage de 0,1° à 180°.

4. Procédé selon l'une quelconque des revendications précédentes, **caractérisé en ce qu'**un étalonnage des longueurs d'onde présentes dans l'impulsion en éventail (6) est effectué par rapport à l'angle de la déviation spatiale, généré par la dispersion angulaire.

5. Procédé selon l'une quelconque des revendications précédentes, **caractérisé en ce que** la plage de longueurs d'onde de la section réfléchie (11) est déterminée par les limites spectrales de la section réfléchie (11).

6. Dispositif permettant de détecter un objet (8) au moyen des impulsions laser à large bande d'un laser (2) avec une largeur de bande prédéfinie couvrant une plage de longueurs d'onde prédéfinie, et une distribution de longueurs d'onde dans la plage de longueurs d'onde, une durée d'impulsion et une fréquence de répétition, dans lequel le dispositif est conçu et configuré pour exécuter le procédé selon l'une quelconque des revendications précédentes, comprenant

  un système lidar (1) pour générer des impulsions laser à large bande,
  au moins un dispositif de dispersion pour appliquer une dispersion angulaire aux impulsions laser afin de générer des impulsions en éventail (6) par séparation spectrale qui éclairent un angle prédéfini de sorte que les différentes longueurs d'onde de la plage de longueurs d'onde des impulsions laser à large bande soient dispersées en éventail sur différents angles,
  un détecteur spectral pour établir les longueurs d'onde de la plage de longueurs d'onde de l'impulsion en éventail (6) présentes dans la section réfléchie (11) de l'impulsion en éventail (6)
  un dispositif permettant de déterminer le temps de propagation de l'impulsion en éventail entre ledit au moins un dispositif de dispersion et l'objet (8), et
  un dispositif permettant de déterminer la distance et la largeur de l'objet par rapport audit au moins un dispositif de dispersion à partir du temps de propagation établi et de la plage de longueurs d'onde établie de la section réfléchie (11) des impulsions en éventail (6).

7. Dispositif selon la revendication 6, **caractérisé en ce que** le dispositif de dispersion est formé par un élément dispersif (5).

8. Dispositif selon l'une quelconque des revendications 6 ou 7, **caractérisé en ce que** le détecteur spectral est formé par un spectromètre (12) ou une caméra multispectrale.

9. Dispositif selon l'une quelconque des revendications 6 bis 8, **caractérisé en ce que** le dispositif présente une pluralité de séparateurs (4) qui séparent l'impulsion laser en impulsions laser correspondantes.

10. Dispositif selon la revendication 9, **caractérisé en ce qu'**une pluralité de dispositifs de dispersion génère une pluralité d'impulsions en éventail à partir de la pluralité des impulsions laser de sorte que les impulsions en éventail générées soient utilisées pour détecter des objets dans différentes zones spatiales.

11. Dispositif selon l'une quelconque des revendications 6 à 10, **caractérisé en ce que** les impulsions laser sont guidées par des fibres optiques (3) jusqu'aux dispositifs de dispersion.

12. Utilisation du dispositif selon l'une quelconque des revendications 6 à 11 dans un véhicule automobile pour déterminer des objets dans l'environnement du véhicule automobile.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2453253 A1
- US 20030043058 A1
- US 20070177841 A1
- US 20140085622 A1
- US 20170307736 A1
- DE 102016009926 A1
- US 20170261612 A1
- US 20080273190 A1